# EUROPÄISCHE PATENTSCHRIFT

(11) **EP 2 379 854 B1**
(45) Veröffentlichungstag und Bekanntmachung des Hinweises auf die Patenterteilung: **06.05.2015**
(21) Anmeldenummer: 09737417.7
(22) Anmeldetag: 20.10.2009
(51) Int. Cl.: F01N 3/20, E03B 7/10

(54) **EISDRUCKKANAL-ELEMENT**
ICE-PRESSURE CHANNEL-ELEMENT
ELÉMENT DE TYPE CANAL POUR LA COMPENSATION DE GEL

(30) Priorität: 17.12.2008 DE 102008054803
(43) Veröffentlichungstag der Anmeldung: 26.10.2011
(73) Patentinhaber: Robert Bosch GmbH, 70442 Stuttgart (DE)
(72) Erfinder: LOLAS, Georgios, 70182 Stuttgart (DE); KLENK, Wolfgang, 74369 Loechgau (DE); SCHREIBER, Ruben, 71640 Ludwigsburg (DE)
(86) Internationale Anmeldenummer: PCT/EP2009/063714
(87) Internationale Veröffentlichungsnummer: WO 2010/069636

(56) Entgegenhaltungen:
- EP-A- 1 553 270
- WO-A-03/027454
- DE-A1- 3 125 463
- DE-A1-102006 048 500
- DE-U- 1 976 872
- US-A1- 2002 170 610

## Beschreibung

### Stand der Technik

Ein etabliertes Verfahren zur Stickoxidreduktion im Abgasmagerbetrieb einer Verbrennungskraftmaschine ist durch die selektive katalytische Reduktion (SCR) gegeben. Bei dem Ammoniak-SCR-Verfahren wird als Reduktionsmittel Ammoniak im Abgas vor einem entsprechenden Reduktionsmittelkatalysator benötigt. Dabei wird bei heutigen Verfahren oftmals durch Einblasen eines wässrigen Harnstoff-Luft-Aerosols in das Motorabgas durch Thermolyse und anschließende (katalysierte) Hydrolyse das eigentliche Reduktionsmittel Ammoniak freigesetzt. Dieses Verfahren ist im Nutzfahrzeugbereich unmittelbar im Serieneinsatz.

Im Hinblick auf einen möglichen Pkw-Einsatz ist dieses Verfahren mit Lufteinblasung aufgrund der hohen Systemkomplexität hinsichtlich Kosten, Bauraum und Druckluftversorgung als wenig marktgerecht einzustufen. Ein weiteres Verfahren zur Druckluftunabhängigkeit sieht die Einspritzung der mittels einer Pumpe unter Druck stehenden Harnstofflösung mit selbst aufbereitenden Ventilen vor. Zur Anwendung kommen oftmals solche Ventile, wie sie in der Benzineinspritzung eingesetzt werden. Schwierigkeiten bereitet hierbei unter anderem die Notwendigkeit der Kühlung eines solchen elektrisch betriebenen Ventils, das unmittelbar an der heißen Abgasanlage angebracht ist. Weiterhin ist die Wintertauglichkeit als problematisch anzusehen. Bei Temperaturen von unter -11 °C gefriert die gebräuchliche Wasser-Harnstoff-Lösung und dehnt sich demzufolge aus. Somit ist zur Erzielung einer Wintertauglichkeit eines oben erwähnten Ventils soweit weitere betroffene Systemkomponenten, wie z. B. Pumpe, Druckregelung und Tank, ein erheblicher konstruktiver und damit die Systemkomplexität erhöhender Aufwand in Kauf zu nehmen. So sind eine eisdruckfeste Konstruktion, eine Beheizungsmöglichkeit sowie eventuell eine rücksaugende Pumpe erforderlich. Für den Einsatz in Personenkraftwagen ergibt sich somit die Fragestellung nach einem in der Systemkomplexität einfachen und damit bezüglich Kosten und Kundenakzeptanz realistischen Konzept. Mit einem einfachen Konzept eröffnet sich die Möglichkeit eines breiten Einsatzes der Harnstoff-SCR-Technik zur Entstickung magerer, so z. B. dieselmotorischer Abgase und damit die Möglichkeit der Erfüllung zukünftig zu erwartender Stickoxidabgasgrenzwerten.

DE 10 2006 012 855 A1 bezieht sich auf ein Verfahren und ein Dosiersystem zur Schadstoffreduktion in Kraftfahrzeugabgasen. Aus DE 10 2006 012 855 A1 ist ein Verfahren zur Dosierung eines fluiden schadstoffreduzierenden Mediums, insbesondere einer wässrigen Harnstofflösung bekannt. Diese wässrige Harnstofflösung wird in ein Kraftfahrzeugabgassystem eingebracht, wobei das fluide Medium zu einem Düsenmodul, insbesondere einer Düse oder einem Ventil befördert und mittels des Düsenmoduls in das Abgassystem eingebracht wird. Ein dem Düsenmodul vorgeordnetes Transportmittel wird mittels des Verfahrens der Pulsweitenmodulation angesteuert. Das Verfahren und das zugehörige Dosiersystem gewährleisten eine präzise und gegenüber Kältegraden relativ robuste Anordnung bzw. Dosierung, insbesondere eines Reduktionsmittels unter Einsatz weniger Komponenten, welches insbesondere Personenkraftwagen eingesetzt werden kann.

Aus DE 3 125 463 A1 ist ein Tank für ein Dosiersystem zum Einbringen eines Flüssigen Reduktionsmittels in dem Abgastrakt einer Brennkraftmaschine bekannt, wobei im Tank ein kompressibles Eisdruck-Element aufgenommen ist, welches mit Luft gefüllt ist, so daß der Gesamtdruck im Tank lediglich entsprechend dem Gasdruck in dem mindestens einen Eisdruck-Element steigt.

### Offenbarung der Erfindung

Der vorliegenden Erfindung liegt die Aufgabe zugrunde, ein Tanksystem, in dem eine wässrige Harnstoff-Lösung bevorratet wird, hinsichtlich seiner Eisdruckbeständigkeit zu verbessern.

Der erfindungsgemäß vorgeschlagenen Lösung folgend, wird im durchfrierenden Medium gezielt der Druck innerhalb von Kavitäten, d. h. im Eis eingeschlossener Flüssigkeitsblasen, die beim Durchfrieren entstehen, vermieden oder zumindest entscheidend herabgesetzt. Dadurch wird ein zu großer Druckaufbau im Inneren des Tanksystems vermieden und andererseits eine Beschädigung im Tankinneren angeordneter Komponenten, wie Leitungen und Sensoren, ausgeschlossen. Beim Durchfrieren einer Kavität wird in dieser der Druck so stark erhöht, bis durch ein Aufbrechen der Eisschicht oder durch ein Verfahren des Tanks selbst der Druck abgebaut werden kann. Diese Erscheinungen werden bei der erfindungsgemäß vorgeschlagenen Lösung ausgeschlossen.

Der erfindungsgemäß vorgeschlagene Lösung folgend, wird dem Eis ein gezielter Weg bis zum Abbau des Drucks zur Verfügung gestellt, in dem durch eine Kompressibilität und/oder eine geringe Haftung zwischen dem sich bildenden Eis und einem Eisdruckkanalelement, noch nicht durch gefrorene Flüssigkeit, d. h. im durchfrieren begriffenes Medium, entweichen kann. Das Entweichen dieses noch nicht durchgefrorenen Mediums erfolgt in einem Bereich des Tanks, in dem die Flüssigkeit dann ohne Druck aufzubauen durchfrieren kann.

Bei der erfindungsgemäß vorgeschlagenen Lösung wird mindestens ein Eisdruckkanal-Element eingesetzt, das mit einem Bereich von noch flüssiger wässriger Harnstoff-Lösung im Bereich der Flüssigkeitskavität im Eis benetzt ist und in einen anderen Bereich hineinragt, der in einem Bereich des Tanksystems liegt, wo noch Gasvolumen zur Verfügung steht, das im Durchfrieren begriffene Medium expandieren kann.

Wird Druck während des Durchfrierens des im Tank bevorrateten Medium innerhalb der Kavität aufgebaut, wird, auch wenn eine dünne Eisschicht die Flüssigkeit und das Eisdruckkanal-Element bereits trennen sollte, durch die entstehenden Kräfte die Flüssigkeit an das Eisdruckkanal-Element gepresst. Da die Verbindung zwischen dem Eis und dem Eisdruckkanal-Element aufgrund der Materialeigenschaften nicht so stark ist und/oder weil das Element kompressibel ausgebildet ist, bildet sich durch den Druck ein Kanal entlang des Eisdruckkanal-Elementes, über den der Druck in der Kavität abgebaut werden kann. Beispielsweise am oberen Ende des Eisdruckkanal-Elementes, bevorzugt dort, wo es aus der Eisschicht herausragt, wird die Flüssigkeit auf die Eisschicht fließen und ohne nennenswerten Druck aufzubauen, typischerweise terrassenförmig an dieser anfrieren. Mittels des erfindungsgemäß vorgeschlagenen mindestens einen Eisdruckkanal-Elementes kann damit ein starkes Aufbauen von Druck im Eis verhindert werden und damit einer Beschädigung des Tanksystems wirksam vorgebeugt werden.

Das erfindungsgemäß vorgeschlagene mindestens eine Eisdruckkanal-Element wird bevorzugt aus einem Material gefertigt, welches keine feste Verbindung zwischen dem Eis der wässrigen Harnstoff-Lösung und dem Eisdruckkanal-Element selbst zulässt. Das Eisdruckkanal-Element kann sehr unterschiedliche Querschnittsformen annehmen, solange es sich über einen Bereich erstreckt, der von der Kavität, in dem beim Gefrieren Druck entsteht, bis in einen Bereich reicht, in dem Volumen vorhanden ist, in das die Flüssigkeit hin entweichen kann. Das mindestens eine Eisdruckkanal-Element kann z. B. vorteilhafterweise aus einem reversiblen kompressiblen Material gefertigt sein, wie z. B. einem Kunststoffschaum, kann aber alternativ auch aus einem Material gefertigt werden, welches in vorteilhafter Weise eine sehr schlecht haftende Verbindung mit der eisförmig vorliegenden wässrigen Harnstoff-Wasserstofflösung eingeht, d.h. dem Reduktionsmittel gegenüber eine sehr schlechte Haftung aufweist.

### Kurze Beschreibung der Zeichnung

Anhand der Zeichnung wird die Erfindung nachstehend eingehender beschrieben.

Es zeigt:
- Figur 1: eine Draufsicht auf eine erste Ausführungsvariante der erfindungsgemäß vorgeschlagenen Lösung,
- Figur 2: eine Darstellung des Schnittverlaufes II-II gemäß Figur 1,
- Figur 3: eine weitere, zweite Ausführungsvariante der erfindungsgemäß vorgeschlagenen Lösung,
- Figur 4: eine Darstellung des Schnittverlaufes gemäß IV-IV in Figur 3 und
- Figur 5: die Draufsicht auf eine dritte Ausführungsvarianten der erfindungsgemäß vorgeschlagenen Lösung

### Ausführungsform

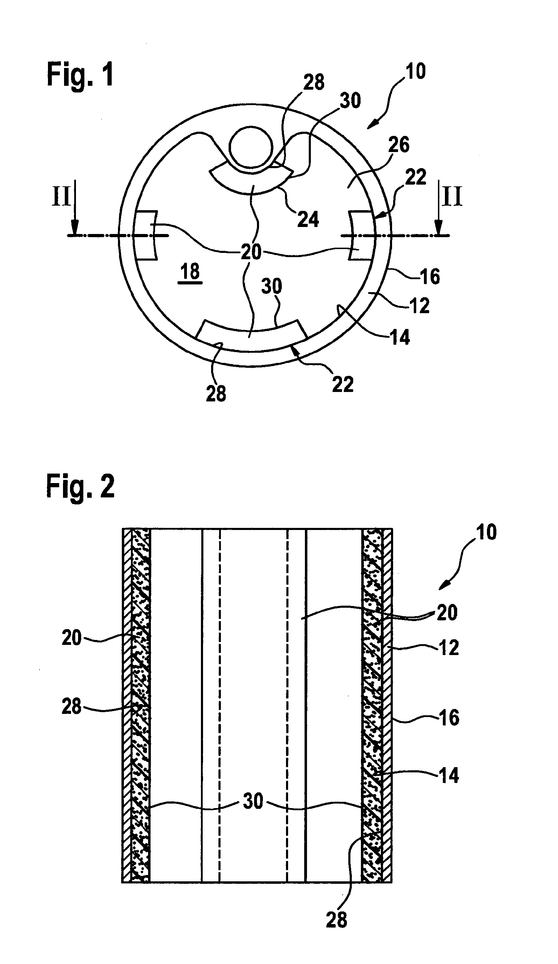

Der Darstellung gemäß Figur 1 ist die Draufsicht auf eine erste Ausführungsvariante der erfindungsgemäß vorgeschlagenen Lösung zu entnehmen.

Figur 1 zeigt die Draufsicht auf eine Tankeinbaueinheit 10 zur Aufnahme eines Reduktionsmittels, insbesondere von Harnstoff oder einer wässrigen Harnstoff-Wasserlösung. Diese gefriert bei Außentemperaturen von -11 °C. Die beim Gefrieren auftretende Volumenänderung des Reduktionsmittels liegt in der Größenordnung von ca. 12 %. Bei einem Aufnahmevolumen einer Tankeinbaueinheit 10 von etwa 1 Liter Reduktionsmittel stellt sich eine Volumenausdehnung von ca.0,1 Liter ein. Im Falle eines Tanks mit einem Fassungsvermögen von 30 Litern stellt sich eine Volumenausdehnung von ca. 3 Litern ein. Abgesehen vom Volumen gelten die nachfolgenden Ausführungen sowohl für eine Tankeinbaueinheit 10 als auch für Tanks.

Die in der Draufsicht in Figur 1 dargestellte Tankeinbaueinheit 10 umfasst eine Wand 12, deren Innenseite durch Bezugszeichen 14 bezeichnet ist und deren Außenseite durch Bezugszeichen 16 bezeichnet ist. Die Tankeinbaueinheit 10 wird an ihrer in der Zeichenebene liegenden Unterseite von einem Tankboden 18 begrenzt. Aus der Darstellung gemäß Figur 1 geht hervor, dass sich an der Innenseite 14 der Wand 12 eine Anzahl von in Stabform z. B. ausgebildeten Eisdruck-Elementen 20 erstreckt. Die Eisdruck-Elemente 20 können z. B. rechteckförmig oder auch eine Krümmung 24 aufweisend ausgebildet sein. In der Darstellung gemäß Figur 1 sind verschiedene Ausführungsvarianten, seien sie mit Krümmung 24 oder ohne Krümmung 24, d. h. im wesentlich in Rechteckform ausgebildet, dargestellt. Die in Stabform ausgebildeten Eisdruck-Elemente 20, in der Darstellung gemäß Figur 1 in 12 Uhr, 3 Uhr, 6 Uhr und 9 Uhr-Position angeordnet, können z. B. einen rechteckförmig ausgebildeten, einen quadratisch ausgebildeten oder auch einen gekrümmten Querschnitt 22 aufweisen.

Von Bedeutung ist, dass die in der Darstellung gemäß Figur 1 in Stabform ausgebildeten Eisdruck-Elemente 20 aus einem Material gefertigt sind, welches elastische Eigenschaften, insbesondere reversibel kompressible Eigenschaften aufweist. So können die in Figur 1 dargestellten, in Stabform ausgebildeten Eisdruck-Elemente z. B. aus Kunststoffschaum ausgebildet sein. Die in der Darstellung gemäß Figur 1 an der Innenseite 14 der Wand 12 der Tankeinbaueinheit 10 angeordneten Eisdruck-Elemente 20 erstrecken sich in die Zeichenebene. Dies bedeutet, dass sich die Eisdruck-Elemente 20 in Stabform, mit im wesentlich rechteckförmigen Querschnitt 22, sei es mit Krümmung 24, sei es ohne Krümmung 24 von einem Bereich der Tankeinbaueinheit 10 aus erstrecken, wo noch bei niedrigen Außentemperaturen bei sich einstellendem Gefrieren des Reduktionsmittels im Hohlraum 26 ein Flüssigkeitsvolumen verbleibt, bis in einen Bereich der Tankeinbaueinheit 10, in dem ein Gasvolumen, so z. B. ein Luftraum gebildet ist.

Die in der Darstellung gemäß Figur 1 wiedergegebenen Eisdruck-Elemente 20 in 12 Uhr, 3 Uhr, 6 Uhr und 9 Uhr-Position können in einer ersten Ausführungsvariante z. B. aus einem kompressiblen Material gefertigt werden. Aufgrund der kompressiblen Eigenschaften des Materials der Eisdruck-Elemente 20 bildet sich beim Gefrieren des Reduktionsmittels im Hohlraum 26 zwischen dem gefrierenden Reduktionsmittel und dem Eisdruck-Element 20 ein Kanal, der sich von der Flüssigphase des Reduktionsmittels bis in einen Freiraum erstreckt, in dem ein Gasvolumen enthalten ist. Die kompressiblen Eigenschaften des Materials der Eisdruck-Elemente 20 ermöglichen die Bildung eines Kanals, der ein Entweichen des Reduktionsmittels in der Flüssigphase in den Freiraum, in dem das Gasvolumen bevorratet ist, ermöglicht. Dadurch baut sich der Druck beim Durchfrieren des im Hohlraum 26 der Tankeinbaueinheit 10 bevorrateten Reduktionsmittels eben in diesen Freiraum, in dem sich das Gasvolumen befindet, ab. Das Gasvolumen ist kompressibel, so dass bei einer Be- bzw. Entlüftung der Tankeinbaueinheit 10 in die Umgebung ein Druckausgleich bei Einströmen des Reduktionsmittels in der flüssigen Phase in den Freiraum gewährleistet ist. Geeignete Materialien sind EPDM-Schäume, EPDM-Moosgummi, die entweder geschlossenporig oder offenporig beschaffen sein können. Von Bedeutung ist ferner, dass sich das gewählte Material nicht mit Reduktionsmittel vollsaugt, da sonst beim Gefrieren seine Kompressibilität leidet. Ferner ist das Material bevorzugt resistent in Bezug auf das Reduktionsmittel. Die Kompressibilität des Materials ist insbesondere bei niedrigen Außentemperaturen reversibel, d.h. ein einmal erzeugter Kanal entformt sich wieder, ohne dass eine bleibende Verformung im Material vorhanden bleibt. Die Medienbeständigkeit des gewählten Materials ist sicherzustellen, ferner eine schlechte Haftung zwischen dem zu Eis gewordenen Reduktionsmittel und dem Material.

Alternativ können gemäß der Ausführungsvariante in Figur 1 die in Stabform ausgebildeten Eisdruck-Elemente 20, seien sie mit rechteckförmigem, trapezförmigem, quadratischen oder gekrümmtem Querschnitt 22 beschaffen, aus einem Material gefertigt werden, welches in Bezug auf das sich beim Gefrieren des Reduktionsmittels einstellende Eis eine geringe Haftung aufweist.

Der Vollständigkeit halber sei erwähnt, dass mit Bezugszeichen 28 eine Wandseite der Eisdruck-Elemente 20 in Stabform gemäß der Darstellung in Figur 1 bezeichnet ist, während Bezugszeichen 30 eine Tankseite, die mit dem Hohlraum 26 zuweisende Seite des Eisdruck-Elementes 20 bezeichnet ist. In Weiterbildung des der Erfindung zu Grunde liegenden Gedankens kann ein Eisdruckelement 20 abweichend zur Stabform auch eine rohrförmige, hohlzylindrische Gestalt aufweisen. In dieser Ausführungsvariante lässt sich das Eisdruckelement 20 insbesondere über die Außenseite einer Tankeinbaueinheit überstülpen, um diese gegen sich im Tank einstellenden Druckaufbau durch Eisbildung zu schützen.

Der Darstellung gemäß Figur 2 ist ein Schnittverlauf gemäß dem Schnittverlauf II-II, wie in Figur 1 eingezeichnet, zu entnehmen.

Aus der Darstellung gemäß Figur 2 geht hervor, dass sich die Eisdruck-Elemente 20 in Stabform im Wesentlichen vom Tankboden 18 aus bis zur Oberseite der Tankeinbaueinheit 10 erstrecken. Dadurch ist gewährleistet, dass sich die Eisdruck-Elemente 20 in Stabform von einem Bereich aus, in dem das Reduktionsmittel, welches im Hohlraum 26 bevorratet ist, bis zu einem Bereich erstrecken, in dem ein Gasvolumen enthalten ist. Abweichend von der in Figur 2 dargestellten Ausführungsform von Eisdruckelementen 20 in Stabform, die sich vom Tankboden 18 bis zur Oberseite der Tankeinbaueinheit bzw. des Tanks 10 erstrecken, können die Eisdruck-Elemente auch kürzer ausgebildet sein, abhängig davon, wie der Tank bzw. die Tankeinbaueinheit durchfriert. Es ist nicht zwingend erforderlich, dass das Eisdruck-Element 20 in Stabform oben an der Oberseite in den Freiraum bzw. das Gasvolumen hineinragt, wenn dessen Kompressibilität einen Druckabbau allein durch Verformung gewährleistet.

Sind hingegen die Eisdruck-Elemente 20 in Stabform vom Tankboden 18 aus bis zur Oberseite des Tanks bzw. der Tankeinbaueinheit 10 ausgebildet, so ist dadurch gewährleistet, dass sich aufgrund der Materialeigenschaften der in Stabform ausgebildeten Eisdruck-Elemente 20 ein Kanal bildet, über den beim Durchfrieren des im Hohlraum 26 bevorrateten Reduktionsmittels der entstehende Eisdruck in eben diesem Freiraum abgebaut werden kann. Dazu sind - wie vorstehend im Zusammenhang mit Figur 1 bereits erwähnt - die Eisdruck-Elemente 20 in Stabform entweder aus einem reversiblen kompressiblen Eigenschaft aufweisenden Material gefertigt oder aus einem Material gefertigt, welches eine geringe Haftung im Bezug auf das beim Durchfrieren des Reduktionsmittels, das im Hohlraum 26 bevorratet ist, entstehende Eis aufweist.

Figur 2 ist des Weiteren zu entnehmen, dass die in Stabform ausgebildeten Eisdruck-Elemente 20 mit ihrer Tankseite 30 die im Hohlraum 26 bevorrateten Reduktionsmittel zuweisen und mit ihrer Wandseite 28 an der Innenseite 14 der Wand 12 der das Reduktionsmittel bevorratenden Tankeinbaueinheit oder des Tanks 10 anliegen. Alternativ besteht auch Möglichkeit, dass mindestens ein Eisdruck-Element 20 freistehend im Hohlraum 26 angeordnet ist.

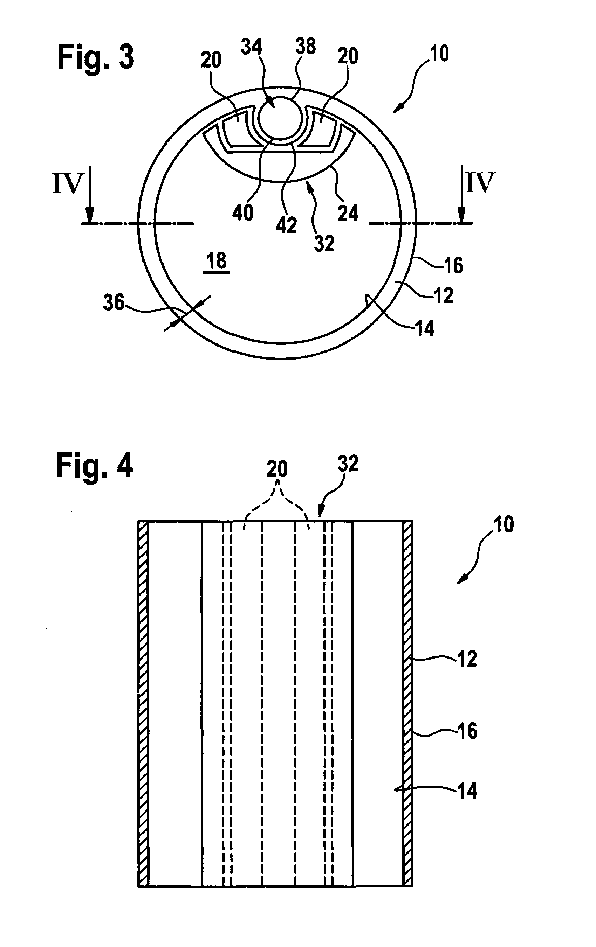

Figur 3 zeigt eine weitere, zweite Ausführung zur Möglichkeit eines Eisdruck-Elementes zur Aufnahme in einen Reduktionsmittel aufnehmenden Tank.

Der Draufsicht gemäß Figur 3 ist zu entnehmen, dass in der Wand 12 der Tankeinbaueinheit 10 Einbauten 34 ausgebildet sind. Bei den Einbauten 34, die von einer dünnen Kanalwand 40 umschlossen sind, können sich zum Beispiel um eine Sauglanze oder um einen Füllstandssensor oder dergleichen handeln. Über die Sauglanze, die sich im wesentlichen in vertikaler Richtung, d. h. in Richtung der Zeichenebene gemäß Figur 3 erstreckt, wird das Reduktionsmittel aus dem Hohlraum 26 z. B. über ein Förderaggregat, in der Regel eine elektrisch betriebene Pumpe, angesaugt und einem Dosiermodul eines Dosiersystems zum Einbringen des Reduktionsmittel in den Abgastrakt in der Verbrennungskraftmaschine zugeführt. Als Einbauten 34 können aber auch Füllstandssensoren angesehen werden, die sich im Wesentlichen in vertikaler Richtung durch die Tankeinbaueinheit 10 - ebenfalls senkrecht zur Zeichenebene gemäß der Darstellung in Figur 3 - erstrecken.

Für die vorstehend aufgezählten Einbauten 34, so z. B. die Sauglanze oder den Füllstandssensor ist zu gewährleisten, dass diese stets von dem im Hohlraum 26 bevorrateten Reduktionsmittel benetzt sind.

Hierzu weist ein Kanal 38, in dem die vorstehend genannten Einbauten 34 aufgenommen sind, Öffnungen auf, so dass innerhalb des Kanales 38 ein zum Füllstand innerhalb des Hohlraumes 26 zur Aufnahme des Reduktionsmittels identischer Füllstand desselben vorliegt. Der Kanal 38 kann jedoch auch vollständig zur Außenseite hin offen ausgebildet werden.

Der Kanal 38 gemäß der Darstellung in Figur 3 ist durch die Kanalwand 40 begrenzt. Zwischen einer Außenseite 42 des Kanales 38 und einem die in der Krümmung 24 ausgebildeten, schildförmigen Eisdruck-Elementes 32 liegt ein Abstand vor. Das mit in der Krümmung 24 ausgebildete in Schildform gestaltete Eisdruck-Element 32 umschließt zwei Eisdruck-Elemente 20. Diese sind komplementär zur Innenkontur des in Schildform ausgebildeten Eisdruck-Elementes 32 ausgebildet. Alternativ können die in Stabform ausgebildeten Eisdruck-Elemente 20 und das in Schildform ausgebildete Eisdruck-Element 32 auch als ein Bauteil ausgebildet sein.

Die Krümmung des in Schildform ausgebildeten Eisdruck-Elementes 32 ist durch Bezugszeichen 24 bezeichnet.

Bei der Darstellung gemäß Figur 3, gelten für das in Schildform ausgebildete, mindestens eine Eisdruck-Element 32 dieselben Randbedingungen wie für die gemäß der Figuren 1 und 2 der Ausführungsvariante in Stabform ausgebildeten Eisdruck-Elemente 20.

So ist das mindestens eine in Schildform ausgebildete Eisdruck-Element 32 gemäß der Darstellung in Figur 3 aus einem reversibel kompressiblen Material wie z. B. Kunststoffschaum gefertigt oder alternativ aus einem Material gefertigt, welches eine geringe Reibung zum vereisten Reduktionsmittel aufweist, welches im Hohlraum 26 der Tankeinbaueinheit 10 bevorratet ist und aufgrund geringer Außentemperaturen < -11 °C durchfriert.

Figur 4 zeigt das mindestens eine in Schildform ausgebildete Eisdruck-Element gemäß der Darstellung in Figur 3 und gemäß Durchschnittverlaufes IV-IV dargestellte Eisdruck-Element.

Aus der Darstellung gemäß Figur 4 geht hervor, dass die Tankeinbaueinheit 10 an der Innenseite 14 der Wand 12 ohne Eisdruck-Elemente ausgestaltet ist und dass sich - angedeutet durch die gestrichelte Darstellung - hinter dem in Schildform ausgebildeten Eisdruck-Elements 32 zwei weitere, in Stabform ausgebildete Eisdruck-Elemente 20 befinden. Aufgrund dieser geschachtelten Anordnung der Eisdruck-Elemente 20 bzw. 32 besteht ein großes Verformungspotenzial der Eisdruck-Elemente 20 bzw. 32, für den Fall, dass diese aus einem reversiblen kompressiblen Material, wie z. B. Kunststoffschaum, gefertigt sind.

Wird das in Schildform gestaltete, die beiden in Stabform geschaffenen Eisdruck-Elemente 20 bzw. 20 überdeckende Eisdruck-Element 32 in einem Material gefertigt, welches eine reversibel Kompressibilität sowie eine geringe Reibung zum Reduktionsmittel, welche in Eisform übergeht, aufweist, so wird ein Kanal zwischen dem in Flüssigphase vorliegenden Reduktionsmittel zu einem oberhalb der Zeichenebene gemäß der Figuren 3 und 4 liegenden Gasvolumens hergestellt, in dem das in Flüssigform vorliegende Reduktionsmittel expandiert.

Bevorzugt lagert sich das in das Gasvolumen bzw. in den Freiraum expandierende Reduktionsmittel terrassenförmig im Gasvolumen, d. h. in dem oberhalb des bereits durchgefroren Volumens des Reduktionsmittels terrassenförmig an.

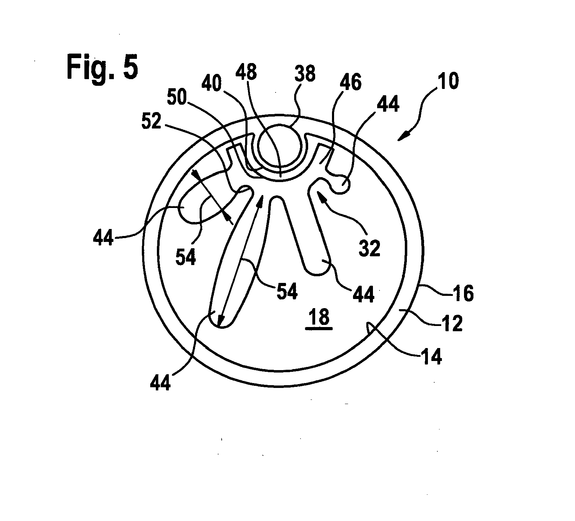

Der Darstellung gemäß Figur 5 ist zu entnehmen, dass der Kanal 38 bzw. dessen Kanalwand 40 an der Kanalaußenseite 42 von einem Eisdruck-Element 32 in Schildform umschlossen ist, an dessen Basis 46 eine Anzahl von fingerförmigen Fortsätzen 44 ausgebildet ist. Zwischen der Innenseite einer Basis 46 des in Schildform ausgebildeten Eisdruck-Elementes 32 ergibt sich ein gekrümmter Spalt 48. Der gekrümmte Spalt 48 ist einerseits von der Kanalaußenseite 42 des Kanals 38 und andererseits von der Innenseite 50 des in Schildform ausgebildeten Eisdruck-Elementes 32 bzw. dessen Basis 46, begrenzt.

An einer Außenseite 52 der Basis 46 des in Schildform ausgebildeten Eisdruck-Elementes 32 erstrecken sich eine Anzahl von fingerförmigen Fortsätzen 44 in radiale Richtung in den Hohlraum 26 der Tankeinbaueinheit 10, der von der Wand 12 begrenzt ist. Mit Bezugszeichen 54 ist eine variable ausgebildete Länge der fingerförmigen Fortsätze 44 bezeichnet, während Bezugszeichen 56 eine Breite der fingerförmigen Fortsätzen 44 an der Außenseite 52 des schildförmig ausgebildeten Eisdruck-Elementes 32 bezeichnet.

Die in den Darstellungen gemäß Figur 5 mit unterschiedlichen Längen 54 ausgebildeten fingerförmigen Fortsätze 44 ragen in den Hohlraum 26, der von der Wand 12 der Tankeinbaueinheit 10 begrenzt ist, in radiale Richtung hinein. Es ist jedoch auch denkbar, dass die in unterschiedlichen Längen 54 und unterschiedlichen Breiten 56 ausgebildeten fingerförmigen Fortsätze 44, die sich von der Außenseite 52 der Basis 46 in radialer Richtung heraus erstrecken, bis an die Innenseite 14 der Wand 12 der Tankeinbaueinheit 10 ragen.

Die in Figur 5 in der Draufsicht dargestellten fingerförmigen Fortsätze 44 können sich über ihre gesamte Länge gemäß der Figuren 4 und 5 über die vertikale Höhe der Wand 12 der Tankeinbaueinheit 10 erstrecken, so dass sichergestellt ist, dass mindestens ein Eisdruck-Element 32 mit fingerförmigen Fortsätzen 44, die sich in radialer Richtung erstrecken, eine Verbindung zwischen der Flüssigphase des Reduktionsmittels und dem Gasvolumen bzw. dem Freiraum innerhalb der Tankeinbaueinheit 10 zur Aufnahme des Reduktionsmittels besteht.

Auch das mindestens eine Eisdruck-Element 32 mit Basis 46 und sich von deren Außenseite 52 in radialer Richtung erstreckenden fingerförmigen Fortsätzen 44 wird aus einem reversibel deformierbaren Material, wie z. B. Kunststoffschaum, gefertigt. Ein derartiges Material bietet eine sehr große Verformungsfähigkeit, so dass ein sich im durchfrierenden Reduktionsmittel aufbauender Eisdruck gezielt in einen Freiraum ohne Einbauten der Tankeinbaueinheit 10 zur Aufnahme des Reduktionsmittels ausbildenden Freiraum entlastet werden kann.

Im Bezug auf die Materialwahl zur Ausbildung des mindestens einen Eisdruck-Elementes 32 in Schildform, sind unterschiedliche Gestaltungsvarianten möglich.

## Patentansprüche

1. Tank (10) oder Tankeinbaueinheit (10) für ein Dosiersystem zum Einbringen eines flüssigen Reduktionsmittels in den Abgastrakt einer Verbrennungskraftmaschine, **dadurch gekennzeichnet, dass** im Tank (10) oder in der Tankeinbaueinheit (10) mindestens ein kompressibles Eisdruck-Element (20, 32) aufgenommen ist, wobei das Eisdruck-Element eine geringe Haftung gegenüber dem beim Gefrieren des Reduktionsmittels entstehenden Eis aufweist und nicht durchgefrorenes Reduktionsmittel in Freiräume im Tank (10) oder in der Tankeinbaueinheit (10) leitet, wobei sich das mindestens eine Eisdruck-Element (20, 32) von einem Bereich im Tank (10) oder der Tankeinbaueinheit (10) aus, in dem das Reduktionsmittel flüssig vorliegt, in einen Bereich mit einem Gasvolumen erstreckt, in den das im Durchfrieren begriffene Reduktionsmittel expandiert.

2. Tank (10) oder Tankeinbaueinheit (10) gemäß Anspruch 1, **dadurch gekennzeichnet, dass** das mindestens eine Eisdruck-Element (20) stabförmig ausgeführt ist und sich im Wesentlichen in vertikaler Richtung durch den Tank (10) oder die Tankeinbaueinheit (10) erstreckt.

3. Tank (10) oder Tankeinbaueinheit (10) gemäß Anspruch 1, **dadurch gekennzeichnet, dass** das mindestens eine Eisdruck-Element (32) schildförmig ausgeführt ist und eine zur Tankseite (30) orientierte Krümmung (24) aufweist.

4. Tank (10) oder Tankeinbaueinheit (10) gemäß Anspruch 1, **dadurch gekennzeichnet, dass** das mindestens eine Eisdruck-Element (32) eine schildförmig gekrümmte, einer Tankseite (30) zuweisende Basis (46) umfasst, von der aus sich einzelne, fingerförmig ausgebildete Fortsätze (44) in radiale Richtung in den Tank (10) oder die Tankeinbaueinheit (10) erstrecken.

5. Tank (10) oder Tankeinbaueinheit (10) gemäß Anspruch 1, **dadurch gekennzeichnet, dass** sich entlang des mindestens einen Eisdruck-Elementes (20, 32) durch Kompression des mindestens einen Eisdruck-Elementes (20, 32) ein Kanal bildet, über den die flüssige Phase des Reduktionsmittels in ein Gasvolumen expandiert.

6. Tank (10) oder Tankeinbaueinheit (10) gemäß Anspruch 1, **dadurch gekennzeichnet, dass** sich ein Kanal für die flüssige Phase des Reduktionsmittels aufgrund geringer Reibung zwischen dem Material des mindestens einen Eisdruck-Elementes (20, 32) und dem Reduktionsmittel bildet.

7. Tank (10) oder Tankeinbaueinheit (10) gemäß Anspruch 1, **dadurch gekennzeichnet, dass** das mindestens eine Eisdruck-Element (20, 32) aus einem reversiblen kompressiblen Material, insbesondere Kunststoffschaum gefertigt ist.

8. Tank (10) oder Tankeinbaueinheit (10) gemäß Anspruch 1, **dadurch gekennzeichnet, dass** das mindestens eine Eisdruck-Element (20, 32) eine PTFE-Beschichtung aufweist.

9. Tank (10) oder Tankeinbaueinheit (10) gemäß Anspruch 1, **dadurch gekennzeichnet, dass** das mindestens eine Eisdruck-Element (20) bzw. (32) als Hohlzylinder beschaffen ist und komplementär zur Geometrie einer Tankeinbaueinheit (10) oder eines Schwapptopfes gestaltet ist.

10. Tank (10) oder Tankeinbaueinheit (10) gemäß Anspruch 1, **dadurch gekennzeichnet, dass** das Reduktionsmittel eine wässrige Harnstoff-Lösung ist.

## Claims

1. Tank (10) or tank insert unit (10) for a dosing system for introducing a liquid reducing agent into the exhaust tract of an internal combustion engine, **characterized in that** at least one compressible ice pressure element (20, 32) is accommodated in the tank (10) or in the tank insert unit (10), wherein the ice pressure element exhibits low adhesion with respect to the ice that forms when the reducing agent freezes, and said ice pressure element conducts non-frozen reducing agent into free spaces in the tank (10) or in the tank insert unit (10), wherein the at least one ice pressure element (20, 32) extends from a region in the tank (10) or in the tank insert unit (10) in which the reducing agent is present in liquid form into a region with a gas volume into which the reducing agent in the process of freezing expands.

2. Tank (10) or tank insert unit (10) according to Claim 1, **characterized in that** the at least one ice pressure element (20) is of bar-shaped form and extends substantially in a vertical direction through the tank (10) or the tank insert unit (10).

3. Tank (10) or tank insert unit (10) according to Claim 1, **characterized in that** the at least one ice pressure element (32) is of shield-like form and has a curvature (24) oriented toward the tank side (30).

4. Tank (10) or tank insert unit (10) according to Claim 1, **characterized in that** the at least one ice pressure element (32) comprises a base (46) which is curved in the form of a shield and which points toward a tank side (30) and from which individual projections (44) of finger-like form extend in a radial direction into the tank (10) or the tank insert unit (10).

5. Tank (10) or tank insert unit (10) according to Claim 1, **characterized in that**, as a result of compression of the at least one ice pressure element (20, 32), there forms along the at least one ice pressure element (20, 32) a duct via which the liquid phase of the reducing agent expands into a gas volume.

6. Tank (10) or tank insert unit (10) according to Claim 1, **characterized in that** a duct for the liquid phase of the reducing agent forms owing to low friction between the material of the at least one ice pressure element (20, 32) and the reducing agent.

7. Tank (10) or tank insert unit (10) according to Claim 1, **characterized in that** the at least one ice pressure element (20, 32) is manufactured from a reversible compressible material, in particular a plastics foam.

8. Tank (10) or tank insert unit (10) according to Claim 1, **characterized in that** the at least one ice pressure element (20, 32) has a PTFE coating.

9. Tank (10) or tank insert unit (10) according to Claim 1, **characterized in that** the at least one ice pressure element (20) or (32) is in the form of a hollow cylinder and is designed in complementary fashion with respect to the geometry of a tank insert unit (10) or of an anti-slosh pot.

10. Tank (10) or tank insert unit (10) according to Claim 1, **characterized in that** the reducing agent is an aqueous urea solution.

## Revendications

1. Réservoir (10) ou unité intégrée au réservoir (10) pour un système de dosage destiné à l'introduction d'un agent de réduction liquide dans le système d'échappement d'un moteur à combustion interne, caractérisé(e) en ce qu'au moins un élément de pression de glace compressible (20, 32) est reçu dans le réservoir (10) ou dans l'unité intégrée au réservoir (10), l'élément de pression de glace présentant une faible adhérence par rapport à la glace se formant lors du gel de l'agent de réduction et menant l'agent de réduction non gelé dans des espaces libres dans le réservoir (10) ou dans l'unité intégrée au réservoir (10), l'au moins un élément de pression de glace (20, 32) s'étendant à partir d'une région dans le réservoir (10) ou l'unité intégrée au réservoir (10), dans laquelle région l'agent de réduction est présent à l'état liquide, jusqu'à une région dotée d'un volume de gaz dans laquelle l'agent de réduction sur le point de geler se dilate.

2. Réservoir (10) ou unité intégrée au réservoir (10) selon la revendication 1, caractérisé(e) en ce que l'au moins un élément de pression de glace (20) est réalisé en forme de barre et s'étend essentiellement dans la direction verticale à travers le réservoir (10) ou l'unité intégrée au réservoir (10).

3. Réservoir (10) ou unité intégrée au réservoir (10) selon la revendication 1, caractérisé(e) en ce que l'au moins un élément de pression de glace (32) est réalisé en forme d'écran et présente une courbure (24) orientée vers le côté du réservoir (30).

4. Réservoir (10) ou unité intégrée au réservoir (10) selon la revendication 1, caractérisé(e) en ce que l'au moins un élément de pression de glace (32) comporte une base (46) associée à un côté du réservoir (30) et courbée en forme d'écran, à partir de laquelle base s'étendent des saillies (44) individuelles réalisées sous forme de doigts dans la direction radiale dans le réservoir (10) ou l'unité intégrée au réservoir (10).

5. Réservoir (10) ou unité intégrée au réservoir (10) selon la revendication 1, caractérisé(e) en ce qu'un canal se forme le long de l'au moins un élément de pression de glace (20, 32) par compression de l'au moins un élément de pression de glace (20, 32), par le biais duquel canal la phase liquide de l'agent de réduction se dilate dans un volume de gaz.

6. Réservoir (10) ou unité intégrée au réservoir (10) selon la revendication 1, caractérisé(e) en ce qu'un canal pour la phase liquide de l'agent de réduction se forme en raison d'un frottement faible entre le matériau de l'au moins un élément de pression de glace (20, 32) et l'agent de réduction.

7. Réservoir (10) ou unité intégrée au réservoir (10) selon la revendication 1, caractérisé(e) en ce que l'au moins un élément de pression de glace (20, 32) est fabriqué à partir d'un matériau compressible réversible, en particulier de la mousse de plastique.

8. Réservoir (10) ou unité intégrée au réservoir (10) selon la revendication 1, caractérisé(e) en ce que l'au moins un élément de pression de glace (20, 32) comprend un revêtement en PTFE.

9. Réservoir (10) ou unité intégrée au réservoir (10) selon la revendication 1, caractérisé(e) en ce que l'au moins un élément de pression de glace (20) ou (32) est prévu sous forme de cylindre creux et est configuré de manière complémentaire à la géométrie d'une unité intégrée au réservoir (10) ou d'un pot anti-ballottement.

10. Réservoir (10) ou unité intégrée au réservoir (10) selon la revendication 1, **caractérisé en ce que** l'agent de réduction est une solution aqueuse d'urée.
